Europäisches Patentamt

European Patent Office

Office européen des brevets

(11) Publication number: **0 198 143**
**B1**

(12) **EUROPEAN PATENT SPECIFICATION**

(45) Date of publication of patent specification: **24.01.90**

(51) Int. Cl.⁵: **F 16 H 1/445**

(21) Application number: **85630056.1**

(22) Date of filing: **16.04.85**

(54) **Locking differential.**

(43) Date of publication of application:
**22.10.86 Bulletin 86/43**

(45) Publication of the grant of the patent:
**24.01.90 Bulletin 90/04**

(84) Designated Contracting States:
**AT BE CH DE FR GB IT LI LU NL SE**

(56) References cited:
**DE-A-3 025 282**
**FR-A-1 302 401**
**US-A-1 447 116**
**US-A-2 803 149**
**US-A-3 913 414**
**US-A-4 043 224**

(73) Proprietor: **ARB CORPORATION LIMITED**
**Lot 2 Maroondah Highway**
**Croydon, Victoria (AU)**

(72) Inventor: **Roberts, Anthony David**
**1 Church Road**
**Menzies Creek, Victoria, 3159 (AU)**

(74) Representative: **Weydert, Robert et al**
**OFFICE DENNEMEYER S.à.r.l. P.O. Box 1502**
**L-1015 Luxembourg (LU)**

Courier Press, Leamington Spa, England.

## Description

This invention relates to locking differentials for motor vehicles and other machines, as specified in the preamble of independent claims 1 and 9 and as known for example from FR—A—1302401.

However there is a need for a locking differential which is simple to manufacture or to convert an existing differential and which nevertheless does not require substantial modifications to the differential axle housing.

To this end a differential locking system in accordance with the present invention is characterized by the features specified in the characterizing portions of independent claims 1 and 9.

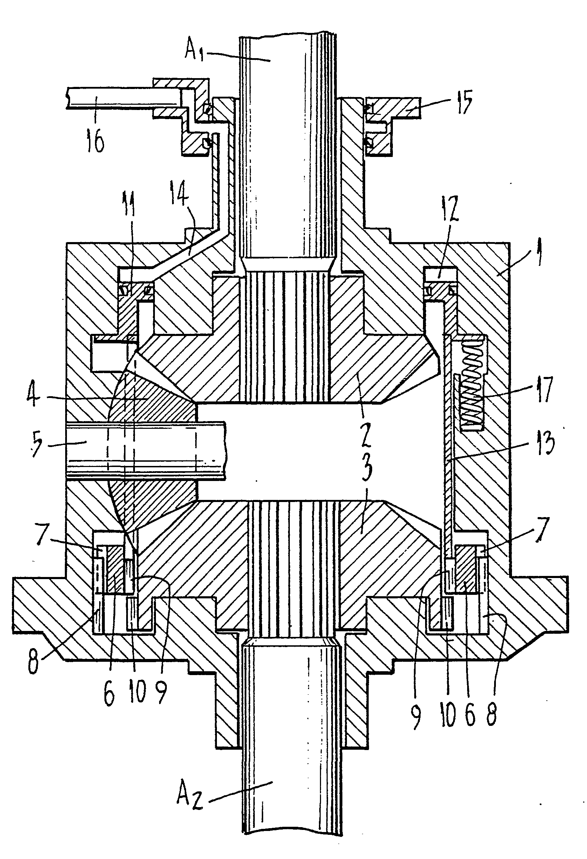

One particularly preferred form of the invention will now be described with reference to the accompanying drawing which is a somewhat schematic sectional elevation of a differential carrier incorporating a locking system embodying the present invention. It will be appreciated that part only of the differential gear adapted to be locked by the locking system embodying the invention is shown for purposes of clarity.

As is usual, the differential includes a differential carrier 1 which rotatably supports a pair of bevel gears 2,3 in the usual manner as well as a pinion gear 4 which meshes with the bevel gears 2,3 and is mounted for rotation on a shaft 5 supported by the casing 1. Half axles $A_1$ and $A_2$ have their splined ends engaging splined openings in the bevel gears 2,3 and passing through the casing 1 in the manner shown.

The locking system embodying the present invention comprises an annulus 6 formed with outwardly directed spline teeth 7 which engage mating spline teeth 8 formed in the differential casing 1 surrounding the bevel gear 3 so that the annulus 6 is axially slidable in the splines 8 relative to the carrier 1. The annulus 6 is similarly formed with inwardly directed spline teeth 9 which are adapted to co-operate with spline teeth 10 formed around the lower periphery of the bevel gear 3.

Axial movement of the annulus 8 is achieved by means of an annular piston 11 arranged in an annular cylinder 12 formed in the casing 1 around the other bevel gear 2, and to which is attached an actuating sleeve 13 which extends from the piston 11 to the annulus 6, to which it is rigidly attached. The sleeve 13 is formed with a cut-out portion around the pinion 4 which enables axial movement of the sleeve 13 by means of the piston 11 to cause engagement between the spline teeth 9 on the annulus 6 and the corresponding spline teeth 10 on the bevel gear 3.

The piston 11 is actuated by means of compressed air, or some other suitable fluid under pressure, which is communicated to the cylinder 12 by means of a passage 14 formed in the casing 1, and around the inlet opening to which an annular collar 15 is sealingly arranged. Compressed air is delivered by means of a pipe 16 which is connected to a fitting (not shown) on the axle casing (not shown).

A piston return spring 17 is housed in a pocket in the casing 1 and bears against the piston 11 as shown to bias the piston towards it de-activated position.

It will be appreciated that compressed air may be delivered to the cylinder 12 via the pipe 16 and passage 14 by actuation of a valve suitably located in the driver's cabin of the vehicle to which the differential is fitted. The compressed air drives the piston 11 axially in the cylinder 12 and causes the sleeve 13 to axially move the annulus 6 to cause engagement between the spline teeth 9 and 10 to thereby lock the bevel gear 3 against rotation. When differential action is again required, the valve in the driver's cabin is returned to the deactivated position and the spring 17 returns the piston 11 to the position shown in the drawing whereby the spline teeth 9 on the annulus 6 are disengaged from the spline teeth 10 on the bevel gear 3.

While the above described embodiment of the invention is presently preferred, it should be appreciated that the specific form described is not essential to the invention. For example, the annulus 6 may be replaced by a segment formed with spline teeth similar to 9 adapted to engage the spline teeth 10 on the bevel gear 3, in which case the sleeve 13 would be replaced by a suitable connecting rod or element. Similarly, the piston 11 may be replaced by some form of mechanically or electrically operated actuator. For example, the annulus or segment may form part of an electro-magnetic actuator to cause suitable locking of the bevel gear.

In the above described embodiment, the differential casing 1 is adapted to be substituted for an existing differential casing in a non-locking differential to thereby convert the differential into a locking differential. Of course, the differential casing may be substituted at the time of initial manufacture where a locking differential is required. Although substitution of the described differential casing is presently preferred, it may be possible where the structure of the differential casing is such as to facilitate conversion, to convert an existing non-locking differential casing to a locking differential casing by the addition of the locking system components described above.

## Claims

1. A locking system for a differential gear including a differential carrier having a body (1) within which a pair of bevel gear (2,3) and at least one pinion gear (4) which meshes with said pair of bevel gears (2,3) are supported, said bevel gears (2,3) being adapted to be splined to axle shafts, said locking system including locking means keyed or splined to said carrier between said carrier body (1) and at least one of said bevel gears (2,3) so as to be capable of axial movement relative to said carrier body (1), said locking means (6) including locking tooth or spline means (9) located on one side of the pinion gear (4) and adapted to engage similar tooth or spline means (10) associated with said one bevel gear (3), characterized in that said locking system further includes cylinder means (12) defined by the body (1) of the carrier and located within the carrier on the other opposite side of the pinion gear (4), and an actuator (11) housed in the cylinder means (12) and movably supported therein to cause said axial movement of said locking means (6) relative to said carrier body (1) whereby said locking tooth or spline means (9) on said locking means (6) engages said tooth or spline means (10) on the one bevel gear (3) to prevent rotation of the one bevel gear (3) relative to said carrier body (1) to thereby lock said differential gear.

2. The locking system of Claim 1, characterized in that said locking means includes an annulus (6) splined to said carrier and slidable axially to cause engagement between said locking tooth or spline means (9) on said annulus (6) and said tooth or spline means (10) associated with said one of said bevel gears (2,3).

3. The locking system of Claim 1 or 2, characterized in that said actuator comprises a piston (11) housed in a cylinder (12) and is connected directly or indirectly to said locking means (6) to cause said axial movement of said locking means (6) relative to said carrier.

4. The locking system of Claim 3, characterized in that said piston (11) and cylinder (12) are annular and are arranged to surround the axle (A1) of the other of said bevel gears (2,3), said piston (11) being connected to said locking means (6) by means of an annular sleeve (13) surrounding said bevel gears (2,3) and including aperture means (14) through which the or each pinion gear (4) is located.

5. The locking system according to Claim 3 or 4, characterized in that passage means are provided for charging said cylinder (12) with compressed air under the control of valve means.

6. The locking system of claim 1, characterized in that said locking means is supported in the carrier body (1) for sliding movement therein between an unlocking position wherein the bevel gears (2,3) are supported in the carrier for rotation relative to the carrier, and a locking position wherein the locking means engages the carrier and said one bevel gear (3) to prevent rotation of said one bevel gear (3) relative to the carrier and thereby lock said one bevel gear (3) to the carrier, said actuator (11) causing the locking means to slide between the locking and unlocking positions, and said carrier including a carrier tooth (8) located inside the carrier, said one bevel gear (3) including a gear tooth (10) located inside the carrier, and the locking means including locking teeth (7,9) so that when the locking means is in the locking position, the locking teeth (7,9) engage the carrier tooth (8) and the gear tooth (10) to prevent rotation of said one bevel gear (3) relative to the carrier.

7. The locking system of claim 1 or claim 6, characterized in that said locking means includes a sleeve (13) supported for sliding movement in the carrier, said locking tooth or spline means (9) being connected to the sleeve (13) for sliding movement therewith, the cylinder means (12) comprises an inside annular chamber axially aligned with the sleeve (13), and the actuator includes a piston (11) supported for movement in the annular chamber and connected to the sleeve (13) to move the locking tooth or spline means (9) of the locking means into engagement with the locking tooth or spline means (10) on said one bevel gear (3).

8. The locking system of claim 7, characterized in that the sleeve (13) includes a side opening, and the pinion gear (4) extends through said side opening.

9. A kit for converting a differential to a locking differential, said kit including a differential carrier having a body (1) within which a pair of bevel gears (2,3) and at least one pinion gear (4) are adapted to be supported, a locking means (6) adapted to be keyed or splined to said differential carrier so as to be capable of axial movement relative to said carrier body (1) between said carrier body (1) and at least one of said bevel gears (2,3), said locking means including locking tooth or spline means (9) adapted to be located on one side of the pinion gear (4), and a replacement bevel gear (3) formed with tooth or spline means (10) which are adapted to cooperate with said tooth or spline means (9) associated with said locking means, characterized in that said carrier body (1) defines a cylinder (12) located on the other opposite side of the pinion gear (4) and adapted to house an actuator (11) for causing axial movement of said locking means relative to said carrier in use thereby preventing rotation of the one bevel gear (3) relative to said carrier.

**Patentansprüche**

1. Sperrsystem für ein Differential mit einem Differentialträger, der einen Körper (1) hat, in welchem ein Paar Kegelräder (2,3) und wenigstens ein Ritzel (4), das mit dem Paar Kegelrädern (2,3) kämmt, gelagert ist, wobei die Kegelräder (2,3) mittels einer Keilverzahnung Achswellen erfassen, wobei das Sperrsystem eine Sperreinrichtung aufweist, die mit dem Träger zwischen dem Trägerkörper (1) und wenigstens einem der Kegelräder (2,3) verkeilt oder keilverzahnt ist, so daß sie zu einer Axialbewegung relativ zu dem Trägerkörper (1) in der Lage ist, wobei die Sperreinrichtung (6) eine Sperrzahn- oder Keilverzahnungseinrichtung (9) aufweist, die auf einer Seite des Ritzels (4) angeordnet ist und eine gleiche Zahn- oder Keilverzahnungseinrichtung (10) erfassen kann, die dem einen Kegelrad (3) zugeordnet ist, dadurch gekennzeichnet, daß das Sperrsystem weiter eine Zylindereinrichtung (12) aufweist, die durch den Körper (1) des Trägers gebildet und innerhalb des Trägers auf der anderen, entgegengesetzten Seite des Ritzels (4) angeordnet ist, und einen Stellantrieb (11), der in der Zylindereinrichtung (12) untergebracht und darin beweglich gehalten ist, um die Axialbewegung der Sperreinrichtung (6) relativ zu dem Trägerkörper (1) zu bewirken, wodurch die Sperrzahn- oder Keilverzahnungseinrichtung (9) an der Sperreinrichtung (6) die Zahn- oder Keilverzahnungseinrichtung (10) an dem einen Kegelrad (3) erfaßt, um eine Drehung des einen Kegelrads (3) relativ zu dem Trägerkörper (1) zu verhindern und dadurch das Differential zu sperren.

2. Sperrsystem nach Anspruch 1, dadurch gekennzeichnet, daß die Sperreinrichtung einen Ring (6) aufweist, der mit dem Träger keilverzahnt und axial verschiebbar ist, um den Eingriff zwischen der Sperrzahn- oder Keilverzahnungseinrichtung (9) an dem Ring (6) und der Zahn- oder Keilverzahnungseinrichtung (10), welche dem einen der Kegelräder (2,3) zugeordnet ist, zu bewirken.

3. Sperrsystem nach Anspruch 1 oder 2, dadurch gekennzeichnet, daß der Stellantrieb einen Kolben (11) aufweist, der in einem Zylinder (12) untergebracht und direkt oder indirekt mit der Sperreinrichtung (6) verbunden ist, um die Axialbewegung der Sperreinrichtung (6) relativ zu dem Träger zu bewirken.

4. Sperrsystem nach Anspruch 3, dadurch gekennzeichnet, daß der Kolben (11) und der Zylinder (12) ringförmig und so angeordnet sind, daß sie die Achswelle (A1) des anderen der Kegelrader (2,3) umgeben, wobei der Kolben (11) mit der Sperreinrichtung (6) mittels einer Ringbüchse (13) verbunden ist, welche die Kegelräder (2,3) umgibt und eine Öffnungseinrichtung (14) aufweist, in der das oder jedes Ritzel (4) angeordnet ist.

5. Sperrsystem nach Anspruch 3 oder 4, dadurch gekennzeichnet, daß eine Kanaleinrichtung vorgesehen ist zum Füllen des Zylinders (12) mit Druckluft unter der Steuerung einer Ventileinrichtung.

6. Sperrsystem nach Anspruch 1, dadurch gekennzeichnet, daß die Sperreinrichtung in dem Trägerkörper (1) zur Verschiebebewegung darin gehalten ist zwischen einer Entsperrposition, in der die Kegelräder (2,3) in dem Träger zur Drehung relativ zu dem Träger gehalten sind, und einer Sperrposition, in der die Sperreinrichtung den Träger und das eine Kegelrad (3) erfaßt, um die Drehung des einen Kegelrads (3) relativ zu dem Träger zu verhindern und dadurch das eine Kegelrad (3) an dem Träger zu arretieren, wobei der Stellantrieb (11) die Sperreinrichtung veranlaßt, sich zwischen der Sperr- und der Entsperrposition zu verschieben, und wobei der Träger einen Trägerzahn (8) aufweist, der innerhalb des Trägers angeordnet ist, wobei das eine Kegelrad (3) einen Getriebezahn (10) aufweist, der innerhalb des Trägers angeordnet ist, und wobei die Sperreinrichtung Sperrzähne (7,9) aufweist, so daß, wenn die Sperreinrichtung in der Sperrposition ist, die Sperrzähne (7,9) den Trägerzahn (8) und den Getriebezahn (10) erfassen, um die Drehung des einen Kegelrads (3) relativ zu dem Träger zu verhindern.

7. Sperrsystem nach Anspruch 1 oder Anspruch 6, dadurch gekennzeichnet, daß die Sperreinrichtung eine Büchse (13) aufweist, die zur Verschiebebewegung in dem Träger gehalten ist, wobei die Sperrzahn- oder Keilverzahnungseinrichtung (9) mit der Büchse (13) zur Verschiebebewegung mit derselben verbunden ist, daß die Zylindereinrichtung (12) eine innere Ringkammer aufweist, die mit der Rüchse (13) axial ausgerichtet ist, und daß der Stellantrieb einen Kolben (11) aufweist, der zur Bewegung in der Ringkammer gehalten und mit der Büchse (13) verbunden ist, um die Sperrzahn- oder Keilverzahnungseinrichtung (9) der Sperreinrichtung in Eingriff mit der Sperrzahn- oder Keilverzahnungseinrichtung (10) an dem einen Kegelrad (3) zu bewegen.

8. Sperrsystem nach Anspruch 7, dadurch gekennzeichnet, daß die Büchse (13) eine Seitenöffnung aufweist und daß das Ritzel (4) sich durch die Seitenöffnung erstreckt.

9. Bausatz zum Umwandeln eines Differentials in ein Sperrdifferential, wobei der Bausatz einen Differentialträger aufweist, der einen Körper (1) hat, in welchem ein Paar Kegelräder (2,3) und wenigstens ein Ritzel (4) gehalten werden können, eine Sperreinrichtung (6), die mit dem Differentialträger verkeilbar oder keilverzahnbar ist, so daß sie zu einer Axialbewegung relativ zu dem Trägerkörper (1) zwischen dem Trägerkörper (1) und wenigstens einem der Kegelräder (2,3) in der Lage ist, wobei die Sperreinrichtung eine Sperrzahn- oder Keilverzahnungseinrichtung (9) aufweist, die auf einer Seite des Ritzels (4) angeordnet werden kann, und ein Austauschkegelrad (3), das mit einer Zahn- oder Keilverzahnungseinrichtung (10) versehen ist, welche mit der Zahn- oder Keilverzahnungseinrichtung (9) zusammenwirken kann, die der Sperreinrichtung zugeordnet ist, dadurch gekennzeichnet, daß der Trägerkörper (1) einen Zylinder (12) bildet, der auf der anderen, entgegengesetzten Seite des Ritzels (4) angeordnet ist und einen Stellantrieb (11) aufnehmen kann zum Bewirken einer Axialbewegung der Sperreinrichtung relativ zu dem Träger im Gebrauch, um dadurch eine Drehung des einen Kegelrads (3) relativ zu dem Träger zu verhindern.

**Revendications**

1. Système de verrouillage destiné à un engrenage différentiel, ce système comprenant un support de différentiel constitué d'un corps (1) au sein duquel sont disposé une paire d'engrenagés côniques (2, 3) et au moins un pignon (4) qui vient s'engrener dans cette paire d'engrenages côniques (2,3), ceux-ci étant conçus pour venir s'engrener via des cannelures dans une arbres de commande, tandis que ce système de verrouillage comprend un moyen destiné à cet effet claveté ou relié à ce support via des cannelures, ce moyen de verrouillage étant disposé entre le corps (1) du support et au moins un des engrenages côniques (2,3), de façon à pouvoir effectuer un mouvement axial par rapport à ce corps (1) de support, ce moyen (6) de verrouillage comportant un moyen (9) de verrouillage à cannelures ou à dents, disposé sur un côté du pignon (4) et étant conçu pour venir s'engrener dans un moyen similaire (10) à cannelures ou à dents, associé à cet engrenage cônique (3), caractérisé en ce que ce système de verrouillage comprend en outre un moyen (12) de cylindre défini, par le corps (1) du support et situé au sein de ce support, sur le côte opposé du pignon (4), ainsi qu'un dispositif (1) de commande encastré dans le moyen (12) de cylindre et mobile au sein de celui-ci de manière à pouvoir fournir le mouvement axial du moyen (6) de verrouillage par rapport au corps (1) de support, le moyen (9) de verrouillage à dents ou à cannelures, disposé sur le moyen (6) de verrouillage, venant s'éngrener dans le moyen (10) à dents ou à cannelures disposé sur l'enrgenage cônique (3), en vue d'empêcher la rotation de cet engrenage (3) par rapport au corps (1) de support, verrouillant ainsi cet engrenage différentiel.

2. Système de verrouillage selon la revendication 1, caractérisé en ce que le moyen de verrouillage comprend une couronne (6) reliée au support via des cannelures, tout en pouvant coulisser axialement, en vue de fournir l'engrenement mutuel entre le moyen (9) de verrouillage à dents ou à cannelures, disposé sur cette couronne (6) et le moyen (10) à dents ou à cannelures, associé à l'un de ces engrenages côniques (2,3).

3. Système de verrouillage selon la revendication 1 ou 2, caractérisé en ce que le dispositif de commande comprend un piston (11) encastré dans un cylindre (12), tandis qu'il est relié directement ou indirectement à ce moyen (6) de verrouillage, en vue de fournir le mouvement axial de ce moyen (6) de verrouillage par rapport au support.

4. Système de verrouillage selon la revendication 3, caractérisé en ce que le piston (11) et le cylindre (12) sont de forme annulaire, tandis qu'ils sont disposés en vue d'entourer l'easieu (A1) de l'autre des engrenages côniques (2,3), ce piston (11) étant relié à ce moyen (6) de verrouillage, via un manchon annulaire (13) entourant ces engrenages côniques (2,3) et comprenant un moyen (14) d'ouverture, à travers lequel le ou chacun des pignons (4) est inséré.

5. Système de verrouillage selon la revendication 3 ou 4, caractérisé en ce que l'on prévoit des moyens de passage en vue de charger le cylindre (12) avec de l'air comprimé, à l'intervention d'une commande provenant d'un moyen de soupape.

6. Système de verrouillage selon la revendication 1, caractérisé en ce que le moyen de verrouillage est disposé dans le corps (1) du support, en vue de pouvoir effectuer un mouvement de coulissement au sein de ce dernier, entre une position de déverrouillage, position dans laquelle les engrenages côniques (2,3) sont disposés dans le support, en vue d'effectuer des rotations par rapport au support, et une position de verrouillage, position dans laquelle le moyen destiné à cet effet vient s'engrener dans le support et dans un engrenage cônique (3), en vue d'empêcher la rotation de cet engrenage cônique (3) par rapport au support, verrouillant ainsi cet engrenage cônique (3) par rapport au support, le dispositif de commande (11) faisant en sorte que le moyen de verrouillage coulisse entre les positions de verrouillage et de déverrouillage, le support comprenant une dent (8) de support située au sein de celui-ci, tandis que l'engrenage cônique (3) comprend une dent (10) d'engrenage située au sein du supoprt, le moyen de verrouillage comprenant des dents (7,9) destinées à cet effet, de telle sorte que lorsque le moyen de verrouillage se trouve dans la position de verrouillage, les dents (7,9) destinées à cet effet, viennent s'engrener dans la dent (8) du support et dans la dent (10) d'engrenage, en vue d'empêcher la rotation de cet engrenage cônique (3) par rapport au support.

7. Système de verrouillage selon la revendication 1 ou 6, caractérisé en ce que le moyen de verrouillage comprend un manchon (13) disposé en vue d'effectuer un mouvement de coulissement dans le support, le moyen (9) de verrouillage à dents où à cannelures étant relié au manchon (13), en vue de pouvoir effectuer un mouvement de coulissement conjointement à celui-ci, tandis que le moyen (12) de cylindre comprend une chambre intérieure annulaire disposée en alignement axial avec le manchon (13), le dispositif de commande comprenant un piston (11) disposé en vue de se mouvoir dans la chambre annulaire, ce piston étant relié au manchon (13), pour faire en sorte que le moyen (9) de verrouillage à dents ou à cannelures du moyen destiné à cet effet vienne s'engrener dans le moyen (10) de verrouillage à dents ou à cannelures, disposé sur l'engrenage cônique (3).

8. Système de verrouillage selon la revendication 7, caractérisé en ce que le manchon (13) comprend une ouverture laterale, le pignon (4) s'étendant à travers cette ouverture.

9. Trousse destinée à la transformation d'un différentiel en un différentiel à verrouillage, cette trousse comprenant un support de différentiel muni d'un corps (1), une paire d'engrenages (2,3) et au moins un pignon (4) étant conçus pour venir se disposer au sein de ce corps, tandis qu'un moyen (6) de verrouillage est conçu pour être claveté ou relié via des cannelures à ce support de différentiel, de telle sorte que ce moyen de verrouillage puisse se déplacer axialement par rapport à ce corps (1) de support, entre ce dernier et au moins un des engrenages côniques (2,3), le moyen de verrouillage comprenant un moyen (9) destiné à cet effet, muni de dents ou de cannelures, conçu pour venir se disposer sur un côté du pignon (4), ainsi qu'un engrenage cônique (3) de remplacement constitué d'un moyen (10) à dents ou à cannelures, celles-ci étant conçues pour coopérer avec le moyen (9) à dents ou à cannelures asscié au moyen de verrouillage, caractérisé en ce que le corps (1) de support définit un cylindre (12) disposé sur l'autre côté opposé du pignon (4) et conçu en vue d'encastrer un dispositif (11) de commande, en vue de fournir un mouvement axial du moyen de verrouillage par rapport au support en service, empêchant ainsi la rotation de cet engrenage cônique (3), par rapport au support.